# EUROPÄISCHE PATENTANMELDUNG

(11) **EP 4 544 952 A1**
(43) Veröffentlichungstag der Anmeldung: **30.04.2025**
(21) Anmeldenummer: 23205486.6
(22) Anmeldetag: 24.10.2023
(51) Int. Cl.: A45C 5/02, A45C 5/03, A45C 13/08, A45C 15/06, G09F 3/02, C09K 11/02, A45C 11/00

(54) **PHOSPHORESZIERENDER ERSTE-HILFE-KOFFER, PHOSPHORESZIERENDER NOTFALLKOFFER, VERFAHREN ZUR HERSTELLUNG EINES PHOSPHORESZIERENDEN ERSTE-HILFE-KOFFERS, PHOSPHORESZIERENDEN NOTFALLKOFFERS**

(71) Anmelder: W. Söhngen GmbH, 65232 Taunusstein (DE)
(72) Erfinder: MAY, Melanie, 65193 Wiesbaden (DE); ARNOLD, Pascal, 66265 Heusweiler (DE)
(74) Vertreter: Hoffmann, Jürgen

(57) **Zusammenfassung**

Mindestens ein Teilbereich des erfindungsgemäßen Erste-Hilfe-Koffers (100) beinhaltet ein phosphoreszierendes Material, wobei dieses durch einen Heißprägevorgang auf eine Au-βenfläche des Erste-Hilfe-Koffers aufgebracht worden ist. Das Heißprägen kann in einer Fabrikanlage effizient erfolgen und sorgt für einen guten Halt der Schicht mit dem phosphoreszierenden Material. Phosphoreszierende Körper des Erste-Hilfe-Koffers (100) erhöhen deren Auffindbarkeit für den behandelnden Ersthelfer.

## Beschreibung

Die Erfindung betrifft einen phosphoreszierenden Erste-Hilfe-Koffer, insbesondere einen phosphoreszierenden Notfallkoffer oder Verbandskasten. Sie betrifft auch ein Verfahren zur Herstellung eines phosphoreszierenden Erste-Hilfe-Koffers.

Unter Erste-Hilfe-Koffer wird hier vorliegend insbesondere verstanden ein Koffer oder Verbandskasten, der befüllt ist mit zumindest einem aus: Pflaster und Verbandsmaterial, Einmalhandschuhen, Erste-Hilfe-Scheren und Pinzetten, Hygienemundschutz, Hygienekleidung, Notduschen und Augenspülung, Desinfektionsmittel und Spender dazu, Defibrillatoren und Zubehör, sowie Beatmungsmasken. Ein Notfallkoffer ist vorliegend als unter den Begriff des Erste-Hilfe-Koffers im Sinne der Erfindung fallend anzusehen. Als Erste-Hilfe-Koffer sind vorliegend insbesondere diejenigen Erste-Hilfe-Koffer zu verstehen, welche die DIN-Normen 13157 oder 13169 erfüllen.

Die Erfindung betrifft unter Anderem die Ausgestaltung von an dem Erste-Hilfe-Koffer vorgesehenem Dekor und/ oder Informationen.

Die Europäische Patentanmeldung mit dem Aktenzeichen EP23152967.8 beschreibt einen Erste-Hilfe-Koffer, der aus zwei Notfallkofferhälften besteht.

Im weiteren Stand der Technik sind Erste-Hilfe-Koffer bekannt, deren Sichtbarkeit durch Anbringen hochreflektierender oder fluoreszierender Aufkleber erhöht ist. Insbesondere das sog. "Erste Hilfe Kreuz", ein weißes Kreuz auf grünem oder rotem Grund, ist im Stand der Technik als hochreflektierender oder fluoreszierender Aufkleber auf Erste-Hilfe-Koffern angebracht.

Es ist Aufgabe der Erfindung, einen verbesserten Erste-Hilfe-Koffer mit erhöhter Sichtbarkeit zu schaffen sowie ein Verfahren anzugeben, mit welchem ein solcher Erste-Hilfe-Koffer hergestellt werden kann.

Die Aufgabe wird durch einen Erste-Hilfe-Koffer mit den Merkmalen nach Anspruch 1 sowie durch ein Verfahren zur Herstellung eines Erste-Hilfe-Koffers nach Anspruch 15 gelöst.

Mindestens ein Teilbereich der erfindungsgemäßen Erste-Hilfe-Koffers beinhaltet ein phosphoreszierendes Material. Hierbei ist das phosphoreszierende Material im Rahmen eines Heißprägevorgangs in einer Schicht auf eine Außenfläche des Erste-Hilfe-Koffers aufgebracht worden.

Durch das phosphoreszierende Material lässt sich der Erste-Hilfe-Koffer auch bei Dunkelheit besonders leicht auffinden.

Heißprägen ist an sich bekannt. Beim Heißprägen drückt ein erhitzter Prägestempel Heißprägefolie gegen das zu beprägende Objekt, welches auf einer Unterlage ("Halterahmen") gehalten ist. Die Heißprägefolie wird als Band bereitgestellt, von dem ein jeweils neuer Bandabschnitt bei jedem Prägevorgang zwischen Prägestempel und zu beprägendem Objekt geführt wird. Der strukturgebende erhitzte Prägestempel löst die Übertragungslage der Heißprägefolie von der Trägerfolie derselben, indem eine an die Trägerfolie angrenzende Ablöseschicht der Übertragungslage aufgeschmolzen wird, die aus Wachs oder wachshaltigen Verbindungen besteht. Der Prägeform des Prägestempels gemäß wird so die Übertragungslage in einer Struktur auf das zu beprägende Objekt aufgebracht, und diese haftet mittels einer (das der Prägefolie entgegengesetzte Ende der Heißprägefolie bildenden) hitzestrukturierbaren Kleberschicht der Übertragungslage an dem Objekt. Eine Schutzlackschicht zwischen der Ablöseschicht und der Kleberschicht stellt in der Regel das optisch sichtbare Element dar, das beim Heißprägen bereitgestellt werden soll.

Die CN 113442622 A offenbart eine Heißprägefolie mit fluoreszierender Schicht. Erfindungsgemäß soll hier phosphoreszierendes Material bereitgestellt werden, insbesondere sollen phosphoreszierende Partikeln in einer Schicht der Übertragungslage, vorzugsweise der Schutzlackschicht, enthalten sein.

Das Heißprägen zur Bereitstellung des phosphoreszierenden Materials hat den Vorteil, dass - im Unterschied etwa zur Nutzung von Aufklebern - die Aufbringung maschinell erfolgen kann, dies etwa in einer Fabrikanlage unmittelbar nach dem Vorgang des Spritzgießens der Unterlage für den Heißprägevorgang (etwa: Schale für den Erste-Hilfe-Koffer). Eine durch Heißprägen aufgebrachte Schicht hält bei mechanischen Beanspruchungen auch besser. Zudem ist für eine erhöhte Hygiene gesorgt, die bei Medizinprodukten erwünscht ist.

Gemäß einer bevorzugten Ausführungsform ist das phosphoreszierende Material als Pigment bereitgestellt, das Partikeln aus SrAl₂O₄:Eu, Dy enthält. Dieses Pigment ist relativ kostengünstig auf dem Markt erhältlich und phosphoresziert recht lange. Vorzugsweise weisen die Partikeln mittlere Durchmesser d₉₀ ≤ 5 µm auf. Es hat sich gezeigt, dass Pigmente dieser Größe besonders gut zur Bildung von Heißprägefolien verarbeitet werden können. Gegebenenfalls vorhandene größere Pigmente können einem Walzvorgang unterzogen werden, so dass die kleinere Partikelgröße erreicht wird. Die Partikeln lassen sich mit einem geeigneten Schutzlack, vorzugsweise unterstützt durch ein Lösemittel, zur Bildung der Schutzlackschicht der Übertragungslage der Heißprägefolie vorsehen.

Gemäß einer weiteren bevorzugten Ausführungsform der Erfindung weist die Schicht mit dem phosphoreszierenden Material eine Schichtdicke von zwischen 5 und 15 g/m², vorzugsweise von zwischen 9 und 13 g/m², besonders vorzugsweise von zwischen 10 und 12 g/m² auf. So etwa hat sich eine Schichtdicke von ca. 11 g/m² als besonders vorteilhaft erwiesen.

Wie bereits ausgeführt, wird das phosphoreszierende Material vorzugsweise - und insbesondere in Form der oben genannten Pigmente - in einer Schicht bereitgestellt, die auch einen Schutzlack und/oder einen Farblack enthält, etwa um auch durch Farbe eine Sichtbarkeit der Struktur bei Tageslicht zu ermöglichen.

Gemäß einer weiteren bevorzugten Ausführungsform der Erfindung ist zur Förderung der (Sichtbarkeit der) Phosphoreszenz eine Schicht unterhalb des phosphoreszierenden Materials vorgesehen: Dies bedeutet, dass eine - vorzugsweise im Heißprägevorgang ebenfalls aufgebrachte - weitere Schicht zwischen der Schicht mit dem phosphoreszierenden Material und der Außenfläche, welche transparent ist oder Weißlack umfasst, vorgesehen ist.

Weiter vorzugsweise stellt die Schicht mit dem phosphoreszierenden Material einen Dekor und/oder eine Information, insbesondere in Form von Schrift und/oder zumindest einem Symbol, bereit. Wie schon ausgeführt, lässt sich durch das phosphoreszierende Material der Erste-Hilfe-Koffer insbesondere bei Dunkelheit leicht auffinden. Der Dekor kann dergestalt sein, dass der typische Benutzer den Erste-Hilfe-Koffer sofort erkennt. Die Information kann auf die Funktion als Erste-Hilfe-Koffer verweisen (beispielsweise einfach mittels Schrift angeben: "Erste-Hilfe-Koffer", "First Aid Kit", o.ä.). Das Symbol kann die Form des Kreuzes haben, das sonst als rotes Kreuz bekannt ist. Insbesondere kann bei Verwendung auch eines roten Farblacks und/oder eines weißen Farblacks in der Schicht mit dem phosphoreszierenden Material der Dekor und/oder die Information bei Tageslicht erkennbar sein.

Bei dem Teilbereich mit dem phosphoreszierenden Material handelt es sich um einen Bereich einer Wandung einer Kofferschale oder die Wandung selbst bzw. die gesamte Kofferschale und/oder zumindest einen Bereich eines anbringbaren Anbauteils, insbesondere eines funktionalen Elements des Erste-Hilfe-Koffers, wie bspw. Griff, Komponente des Griffs, Verschluss, Komponente des Verschlusses, wie zum Beispiel Betätigungselement des Verschluss oder auch Stapelzentriereinrichtungen. Ebenso ist denkbar, dass die Teilbereiche abgesehen von der Funktion des Phosphoreszierens eine ansonsten rein ästhetische Funktion besitzen, wie dies bspw. bei Einsatzteilen im Griff oder Zierleisten der Fall ist. Diese erhalten entsprechend erst durch die Erfindung einen signifikanten technischen Nutzen. Teilbereiche, die ein phosphoreszierendes Material beinhalten, besitzen mehrere Vorteile. Durch das Nachleuchten, welches bevorzugt über mehrere Stunden anhält, ist der Erste-Hilfe-Koffer nachdem er Licht ausgesetzt wurde, auch bei schwacher Beleuchtung oder im Dunkeln gut auffindbar, was insbesondere bei einem Stromausfall oder schwacher Beleuchtung von Vorteil ist. Indem nur Teilbereiche des Erste-Hilfe-Koffers das phosphoreszierende Material beinhalten, werden die Herstellungskosten gesenkt, da phosphoreszierende Materialien teurer sind als bspw. thermoplastische Kunststoffe, aus denen die Bauteile eines Erste-Hilfe-Koffers üblicherweise bestehen. Dies gilt sowohl bei Bereitstellung des phosphoreszierenden Materials durch einen Heißprägevorgang und ebenso ergänzend, wenn das phosphoreszierende Material dem thermoplastischen Kunststoff vor der Herstellung zugesetzt wurde. Auch der Einsatz für militärische Zwecke ist besonders vorteilhaft, da keine Lichtquelle benötigt wird, um den Erste-Hilfe-Koffer bspw. bei Nachteinsätzen gut sehen zu können.

Gemäß vorteilhaften Ausführungsformen der Erfindung weist der Erste-Hilfe-Koffer zwei Kofferschalen auf und die Außenfläche ist auf einer Außenwandung einer Kofferschale bereitgestellt. Alternativ oder zusätzlich kann die Außenfläche an an zumindest einer der Kofferschalen anbringbaren Anbauteilen vorgesehen sein.

Weiter alternativ oder zusätzlich können Körper als Teilbereiche, welche das phosphoreszierende Material beinhalten, an die Kofferschale anbringbare Anbauteile sein, wobei die Teilbereiche das phosphoreszierende Material als Teil des Materials beinhalten, das die Teilbereiche als Körper bildet. In diesem Aspekt wird zusätzlich zu dem per Heißprägen aufgebrachten phosphoreszierenden Material weiteres phosphoreszierendes Material in den Körpern/ den Anbauteilen in dem das die Körper/ Anbauteile bildenden Material selbst bereitgestellt.

Üblicherweise sind die Kofferschalen und/oder die anbringbaren Anbauteile Spritzgussteile aus Kunststoff, wobei die Anbauteile nachträglich an die Kofferschalen angebracht werden. Beispielsweise können die Kofferschalen in einem ersten Spritzgussvorgang aus einem thermoplastischen Kunststoff, wie Acrylnitril-Butadien-Styrol oder Polypropylen, hergestellt werden. In einem zweiten Spritzgussvorgang können die anbringbaren Anbauteile aus dem gleichen thermoplastischen Kunststoff hergestellt werden, wobei diesem vor dem Spritzgussvorgang phosphoreszierendes Material zugesetzt wurde. So müssen die Herstellungsprozesse nicht aufwändig verändert werden, weil Kofferschalen und Anbauteile ohnehin durch Spritzguss hergestellt werden. Zudem werden so die Herstellungskosten durch den gezielten Einsatz des kostenintensiven phosphoreszierenden Materials gesenkt. Durch das nachträgliche Anbringen der phosphoreszierenden Anbauteile wird die Flexibilität in der Herstellung erhöht, da auf diese Weise verschiedene Teilbereiche des Erste-Hilfe-Koffers phosphoreszierend ausgestaltet werden können. Die Anbauteile sind bspw. über eine Schnappverbindung aus Kunststoff mit den Kofferschalen verbunden und/oder der Bereich des Anbauteils, der das phosphoreszierende Material beinhaltet, ist mit dem Anbauteil selbst über eine Schnappverbindung verbunden. Die Schnappverbindung kann so dimensioniert sein, dass sie manuell nicht lösbar ist.

Gemäß einer vorteilhaften Ausführungsform hierzu sind die anbringbaren Anbauteile zumindest aus einem der folgenden Elemente gewählt: Griff; Komponente des Griffs, insbesondere Einsatzteil; Verschluss; Komponente des Verschlusses, insbesondere Betätigungselement; Stapelzentriereinrichtung; Zierleiste. Die phosphoreszierende Ausgestaltung der genannten Anbauteile hat den Vorteil, dass die funktionalen Elemente, insbesondere der Griff und die Verschlüsse, auch bei schwacher Beleuchtung oder im Dunkeln mehrere Stunden lang gut sichtbar sind. Dem behandelnden Ersthelfer, Arzt oder sonstigem Bedienpersonal ist es durch die erhöhte Sichtbarkeit leichter und schneller möglich, die funktionalen Elemente aufzufinden.

Beinhalten der Griff und/oder eine Kofferschale entsprechend dem Anspruch 10 als Körper phosphoreszierendes Material, wird die Sichtbarkeit noch weiter erhöht und der Erste-Hilfe-Koffer ist selbst bei schwacher Beleuchtung auch aus größerer Entfernung sichtbar und lässt sich entsprechend schnell auffinden.

Weist das phosphoreszierende Material eine Nachleuchtdauer von mindestens 1 h, bevorzugt mindestens 2 h, besonders bevorzugt mindestens 3 h auf, ist die Sichtbarkeit der entsprechend ausgestalteten Teilbereiche über einen besonders langen Zeitraum erhöht.

Besteht ein Körper des Erste-Hilfe-Koffers aus einem Material, das phosphoreszierendes Material beinhaltet, und beträgt der Massenanteil des phosphoreszierenden Materials in diesem Körper mindestens 10 %, vorzugsweise mindestens 30 %, ist die Leuchtkraft besonders hoch, was wiederum die Sichtbarkeit des Erste-Hilfe-Koffers weiter verbessert. Im Falle der Einbettung von zusätzlichem phosphoreszierenden Material, das nicht durch Heißprägen aufgebracht ist, in einen Körper, kann ebenfalls das Pigment verwendet werden, welches Partikeln aus SrAl₂O₄:Eu, Dy enthält, welche die nun aber vorzugsweise mittlere Durchmesser d₅₀ = 25 ± 4 µm und d₉₀ ≤ 60 µm aufweisen. In diesem Fall lässt sich das phosphoreszierende Material besonders einfach und zuverlässig mit einem thermoplastischen Kunststoff, wie bspw. Acrylnitril-Butadien-Styrol oder Polypropylen, mischen. Dies erleichtert die Herstellung des Ausgangsmaterials für das Formen der phosphoreszierenden anbringbaren Anbauteile bzw. der Kofferschalen. Zudem wird aufgrund der guten Mischbarkeit und Stabilität gegenüber Entmischung das Formen der phosphoreszierenden anbringbaren Anbauteile bzw. der Kofferschalen selbst vereinfacht und die Homogenität der fertig geformten Teile erhöht.

Ist der Erste-Hilfe-Koffer mit zumindest einem aus Pflaster und Verbandsmaterial, Einmalhandschuhen, Erste-Hilfe-Scheren und Pinzetten, Hygienemundschutz, Hygienekleidung, Notduschen und Augenspülung, Desinfektionsmittel und Spender dazu, Defibrillatoren und Zubehör oder Beatmungsmasken befüllt, können diese leicht auffindbar und gleichzeitig geschützt vor Kontaminationen vorgehalten werden.

Ist zumindest ein Oberflächenteilbereich des Erste-Hilfe-Koffers metallisiert, wird die Sichtbarkeit durch die im Vergleich zur nicht metallisierten Oberfläche erhöhte Reflektivität weiter verbessert, da das von dem phosphoreszierenden Material abgegebene Licht in einem stärkeren Maße reflektiert wird, als dies bei einer üblichen Kunststoffoberfläche der Fall wäre.

Das erfindungsgemäße Verfahren zur Herstellung eines Erste-Hilfe-Koffers beinhaltet das Bereitstellen von zwei Kofferschalen und einem Griff, das Vornehmen zumindest eines Heißprägevorgangs, wobei in der Gesamtheit von allen Heißprägevorgängen auf zumindest eine der Kofferschalen und/oder den Griff eine Schicht mit phosphoreszierenden Partikeln aufgebracht wird (etwa: zwei Heißprägevorgänge, einen für eine Kofferschale und einen für den Griff; oder zwei Heißprägevorgänge, jeweils einen für beide Kofferschalen und keinen für den Griff; oder drei Heißprägevorgänge, für beide Kofferschalen und den Griff). Nach dem Verbinden der beiden Kofferschalen zu einem Erste-Hilfe-Koffer wird der Griff an eine Kofferschale angebracht. Es können auch zwei Griffe vorgesehen sein, wobei vorzugsweise jeweils ein Griff an einer anderen Kofferschale angebracht wird.

Das erfindungsgemäße Verfahren führt zur Herstellung eines Erste-Hilfe-Koffers mit dem Vorteil der leichten Auffindbarkeit bei Dunkelheit und den genannten Vorteilen des Bereitstellens des phosphoreszierenden Materials in einer Heißprägeschicht wie oben ausgeführt.

Gemäß einer bevorzugten Ausführungsform hierzu erfolgt jeder Heißprägevorgang mit einem Heißprägestempel, welcher auf eine Temperatur von zwischen 130 °C bis 165 °C gebracht ist. Diese Temperatur hat sich als vorteilhaft erwiesen, um das phosphoreszierende Material besonders gut aufzubringen. Dies gilt insbesondere zum Aufbringen auf einen Körper aus einem thermoplastischen Kunststoff, wie Acrylnitril-Butadien-Styrol oder Polypropylen, was das bevorzugte Material etwa für eine Kofferschale ist. Dieses Material schmilzt bei 130 °C bis 165 °C nicht auf.

Der Heißprägestempel wird vorzugsweise über eine Zeitdauer von zwischen 0,25 s und 5 s gegen die Kofferschale beziehungsweise den Griff gedrückt wird, und/oder dies vorzugsweise mit einem Druck von zwischen 3 und 9 bar, vorzugsweise zwischen 5 und 7 bar (etwa: mit 6 bar), und/oder dies vorzugsweise unter Aufbringung eines Gewichts von zwischen 600 und 1000 kg, vorzugsweise zwischen 720 und 880 kg (etwa: mit 800 kg). Es hat sich erwiesen, dass diese Parameterwerte besonders zuverlässig für einen langen Halt der durch Heißprägen aufgebrachten Schicht mit dem phosphoreszierenden Material sorgt.

Gemäß einer vorteilhaften Ausführungsform des Verfahrens werden die Kofferschalen und vorzugsweise auch der Griff in einem ersten Spritzgussvorgang aus einem thermoplastischen Kunststoff, bevorzugt aus einem Acrylnitril-Butadien-Styrol-Kunststoff, hergestellt. Anschließend wird auf eine Außenwandung zumindest einer Kofferschale und/oder des Griffs durch Heißprägen das phosphoreszierende Material aufgebracht.

Es ist des Weiteren möglich, dass in einem zweiten Spritzgussvorgang an zumindest einer Kofferschale anbringbare Anbauteile aus einem thermoplastischen Kunststoff, vorzugsweise aus einem Acrylnitril-Butadien-Styrol-Kunststoff, hergestellt werden, wobei dem Kunststoff das phosphoreszierende Material vor dem Spritzgussvorgang zugesetzt wird. Auf diese Weise kann die bereits bestehende Infrastruktur, insbesondere die kostenintensiven Spritzgussformen, genutzt werden. Die Herstellung in zwei separaten Spritzgussvorgängen erleichtert zudem das gezielte reduzierte Einsetzen der im Vergleich zu thermoplastischen Kunststoffen hochpreisigen phosphoreszierenden Materialien.

Zur besonders guten Sichtbarkeit kann auch schon vor dem ersten Spritzgussvorgang dem thermoplastischen Kunststoff für die Herstellung der Kofferschalen und/oder des Griffs phosphoreszierendes Material zugesetzt werden. Dadurch können alle Teile des Erste-Hilfe-Koffers aus demselben Ausgangsmaterial geformt werden, was die Herstellung vereinfacht. Vorzugsweise wird in jedem Heißprägevorgang eine Heißprägefolie verwendet, welche eine Transferlage aufweist, die phosphoreszierende Partikeln aus SrAl₂O₄:Eu, Dy enthält. Dass diese Partikeln vorteilhaft sind, wurde bereits oben dargestellt. Dies gilt vorzugsweise und insbesondere dann, wenn die phosphoreszierenden Partikeln mittlere Durchmesser d₉₀ ≤ 5 µm aufweisen.

Zudem ist die Sichtbarkeit eines mit diesem Verfahren hergestellten Erste-Hilfe-Koffers besonders hoch, da zusätzliche dem Ersthelfer, Arzt oder sonstigem Bedienpersonal zugewandte Bereiche phosphoreszieren.

Die neuartige Heißprägefolie umfasst:
- eine Trägerfolie und
- eine Übertragungslage,
wobei die Übertragungslage aufweist:
- eine Ablöseschicht, eine Schutzlackschicht und eine hitzeaktivierbare Kleberschicht, und
gemäß der Erfindung weist die Schutzlackschicht neben Schutzlack auch phosphoreszierende Partikeln auf.

Vorteilhaft ist die Schicht unterhalb der phosphoreszierenden Schicht transparent oder besteht aus Weißlack, so dass vorzugweise bei der neuartigen Heißprägefolie zwischen der Schutzlackschicht mit den phosphoreszierenden Partikeln und der Kleberschicht eine transparente Schicht oder eine Schicht aus Weißlack angeordnet ist.

Werden zusätzlich mindestens Oberflächenteilbereiche der Kofferschalen und/oder des Griffs metallisiert, ist die Sichtbarkeit des so hergestellten Erste-Hilfe-Koffers aufgrund der erhöhten Reflektivität der metallisierten Oberflächenteilbereiche noch höher.

Gemäß einer vorteilhaften Ausführungsform hierzu wird das Metallisieren durch die folgenden Schritte realisiert:
- Ätzen der Oberflächenteilbereiche des Erste-Hilfe-Koffers mit einer Lösung bestehend aus Chromsäure, Schwefelsäure und Wasser, wobei das Ätzen bei einer Temperatur von mind. 60 °C, bevorzugt bei 70 °C durchgeführt wird;
- Aktivieren der Oberflächenteilbereiche mit Palladium, wobei das Palladium kolloidal gelöst und von einer Schutzkolloidhülle umgeben ist oder ionisch vorliegt;
- Benetzen der Oberflächenteilbereiche mit einer Beschleunigerlösung, wobei die Beschleuniger-lösung so gewählt ist, dass sie ionisch vorliegendes Palladium reduziert oder im Fall von kolloidal gelöstem Palladium die das kolloidale Palladium umgebende Schutzkolloidhülle entfernt;
- Chemisches Abscheiden von Nickel auf den Oberflächenteilbereichen;
- Galvanisches Abscheiden von Kupfer auf den vernickelten Oberflächenteilbereichen;
- Galvanisches Abscheiden von Nickel auf den verkupferten Oberflächenteilbereichen;
- Galvanisches Abscheiden von Chrom auf den durch galvanisches Abscheiden vernickelten Oberflächenteilbereichen;
- Trocknen der Oberflächenteilbereiche, bevorzugt bei einer Temperatur von 67 °C,
wobei zwischen den einzelnen Schritten die Oberflächenteilbereiche mit Wasser, bevorzugt mit deionisiertem Wasser, gespült werden.

Auf diese Weise wird durch schichtweisen Aufbau eine besonders homogene Chromschicht als nach außen abschließende Schicht des metallisierten Bereichs erzeugt. Diese Chromschicht weist eine besonders hohe Reflektivität auf, was die Sichtbarkeit der phosphoreszierend ausgestalteten Teilbereiche noch weiter erhöht.

Im Übrigen lassen sich die auf den Erste-Hilfe-Koffer bezogenen Merkmale und Vorteile entsprechend auf die Verfahren übertragen, und umgekehrt, so dass an dieser Stelle auf weitere Wiederholungen verzichtet wird.

Nachfolgend wird die Erfindung unter Bezug auf die jeweilige Zeichnung näher beschrieben, wobei
- Fig. 1: eine perspektivische Ansicht einer ersten Ausführungsform des erfindungsgemäßen Erste-Hilfe-Koffers zeigt;
- Fig. 2: eine Seitenansicht des Erste-Hilfe-Koffer aus Fig. 1 zeigt; und
- Fig. 3: eine Draufsicht auf den Erste-Hilfe-Koffer aus Fig. 1 zeigt; und
- Fig. 4: den Schichtaufbau einer bei dem Vorsehen des phosphoreszierenden Materials für den Erste-Hilfe-Koffer verwendeten Heißprägefolie zeigt.

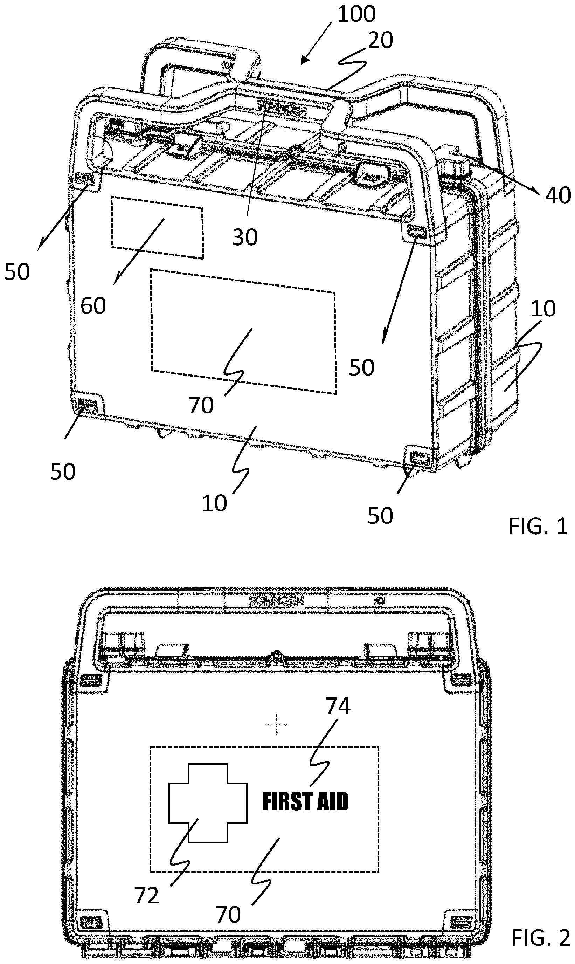

In Fig. 1 ist ein im Ganzen mit 100 bezeichneter erfindungsgemäßer Erste-Hilfe-Koffer dargestellt. Die Kofferschalen 10 beinhalten kein phosphoreszierendes Material. Hingegen können der Griff 20, das Einsatzteil 30, die Verschlüsse 40 und die Stapelzentriereinrichtungen 50 phosphoreszierendes Material enthalten. Die Ausgestaltung des Griffs 20 ist ausdrücklich nicht auf die in Fig. 1 gezeigte Form beschränkt. Anhand von Fig. 1 wird offensichtlich, dass bereits die phosphoreszierende Ausgestaltung einzelner Teilbereiche, insbesondere die phosphoreszierende Ausgestaltung der anbringbaren Anbauteile Griff 20, Einsatzteil 30, Verschlüsse 40 und Stapelzentriereinrichtungen 50 die Sichtbarkeit des Koffers erhöhen, selbst wenn dieser bspw. in einer Wandhalterung auf Augenhöhe befestigt ist, die sich auf der vom Betrachter abgewandten Seite des Erste-Hilfe-Koffers befindet. Der Griff 20 ist hier, verkürzt gesagt, in einer S-Form dargestellt. Denkbar sind ebenso andere Formen des Griffes 20, wie bspw. simple Henkelgriffe. Vorliegend wird durch einen Heißprägevorgang zumindest in einem Feld 70 eine Information in Form eines Symbols und einer Schrift bereitgestellt. Dies ist im Detail in Fig. 2 dargestellt: Als Symbol ist hier ein Kreuz 72 bereitgestellt und als zweite Information der Schriftzug "First Aid" ("Erste-Hilfe"), mit 74 bezeichnet. Hingewiesen wird auch auf das beispielhaft gezeigte Feld 60, wo Oberflächenteilbereiche metallisiert sind. Metallisiert werden können beliebige Oberflächenteilbereiche an den Kofferschalen und/oder Anbauteilen.

Über das in Fig. 2 dargestellte Feld 70 hinaus können auch Anbauteile in einem Heißprägevorgang mit einem phosphoreszierenden Material versehen sein. Hier bieten sich beispielsweise der Griff 20 und/oder die kreuzförmigen Verschlüsse 40, gegebenenfalls auch die Stapelzentriereinrichtungen an.

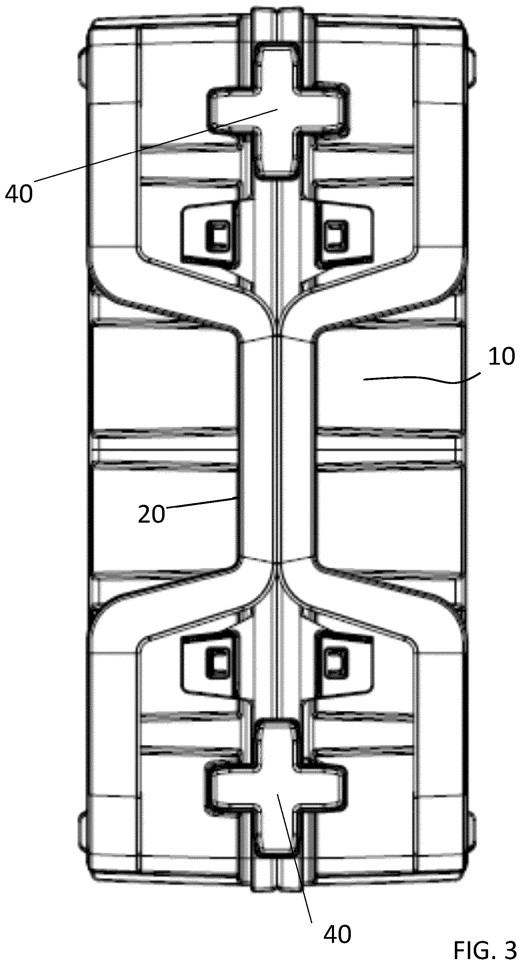

Fig. 3 verdeutlicht durch die Draufsicht, dass bei optionaler phosphoreszierender Ausgestaltung des Griffs 20, der Verschlüsse 40 und auch der Stapelzentriereinrichtungen 50 die Sichtbarkeit des Koffers erhöht wird, auch wenn dieser bspw. in einem Regal auf Augenhöhe liegt. Die Kofferschalen 10 müssen kein phosphoreszierendes Material beinhalten.

Insgesamt kann durch phosphoreszierendes Material, das durch einen Heißprägevorgang aufgebracht worden ist, der Erste-Hilfe-Koffer für den Ersthelfer besser sichtbar sein, wodurch dieser schneller auf den Inhalt des Koffers schließen kann.

Das an sich bekannte Heißprägen kann beispielsweise unter Nutzung einer Vorrichtung beschrieben werden, wie sie in der DE 10 2012 109 315 A1 beschrieben ist. Dort ist beschrieben, wie eine nicht-ebene Oberfläche beprägt werden kann. Es versteht sich, dass bei beprägter ebener Oberfläche der Vorgang sogar eher erleichtert ist.

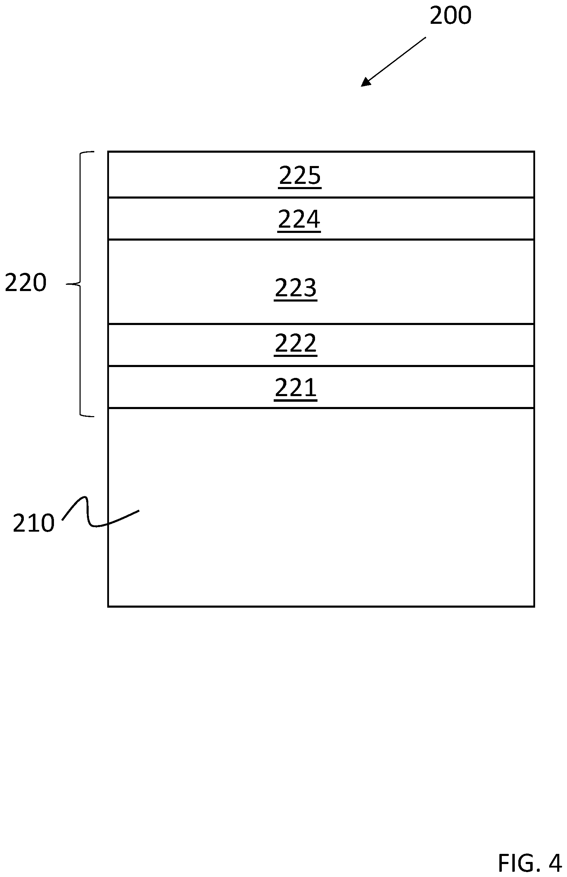

Die bei der Erfindung genutzte Heißprägefolie ist in Fig. 4 gezeigt und dort im Ganzen mit 200 bezeichnet. Sie umfasst eine Trägerfolie 210 sowie eine Übertragungslage 220. Insofern, als vorliegend von Schichten und/oder Lagen die Rede ist, kann es sich auch immer um einen Mehrschichtaufbau handeln, der insgesamt eine Schicht/eine Lage darstellt.

Die Trägerfolie 210 besteht aus Polyestermaterial, z.B. PET, aus Polypropylen, Polystyrol, PVC, PMMA, ABS und/oder Polyamid.

Die Übertragungslage 220 umfasst mehrere Teillagen bzw. Teil-Schichten, nämlich zum einen die Ablöseschicht 221, die aus Wachs oder wachshaltigen Verbindungen besteht, die beim Heißprägen aufschmelzen und so dafür sorgen, dass die Übertragungslage 220 als Ganzes sich an den beprägten Stellen, also strukturiert, von der Trägerfolie 210 löst. Es gibt des Weiteren eine Schutzlackschicht 223, die vorliegend mit phosphoreszierenden Partikeln mit einem Partikeldurchmesser von d₉₀ ≤ 5 µm versehen ist. Auf der der Trägerfolie 210 abgewandten Seite ist eine hitzeaktivierbare Kleberschicht 225 vorgesehen. Mittels dieser bei Hitze aktivierbaren Kleberschicht 225 haftet die Übertragungslage gemäß der durch den Prägestempel vorgegebenen Struktur an der Unterlage, vorliegend also beispielsweise an der Kofferschale 10, die aus einem thermoplastischen Kunststoff, beispielsweise aus Acrylnitril-Butadien-Styrol-Kunststoff, hergestellt sein kann.

Die Schicht 224 befindet sich nach dem Aufbringen unterhalb der Schutzlackschicht mit den phosphoreszierenden Partikeln. Hier kann ein transparentes Material 224 und/oder Weißlack vorgesehen sein, um den Effekt der Phosphoreszenz zu fördern. Die Schicht 224 kann auch ganz entfallen.

Auch die Schicht 222 kann eine Dekor- und/oder Funktionsschicht sein. Auch diese Schicht 222 kann optional entfallen.

Die genannte Metallisierung kann auch indirekt dadurch erfolgen, dass in einer oder beiden der Schichten 222 und 224 eine Metallisierung bereitgestellt ist. Insofern kann auch im oben genannten Bereich 60 die Metallisierung durch Heißprägen aufgebracht sein. Optional kann im Bereich 60 eine Schicht durch einen gesonderten Heißprägevorgang mit einer weiteren Heißprägefolie vergleichbaren Aufbaus aufgebracht sein, durch die eine Metallisierung etwa in der Schicht 223 bereitgestellt wird, wobei in der weiteren Heißprägefolie die phosphoreszierenden Partikeln entfallen. Zwei Heißprägevorgänge sind leichter umsetzbar als der eine Heißprägevorgang und zusätzliche Stufen der Metallisierung mit Ätzen, Galvansieren, etc. es darf darauf hingewiesen werden, dass generell bei Erste-Hilfe-Koffern auch ohne durch Heißprägen aufgebrachtes phosphoreszierendes Material eine Metallisierungsschicht durch Heißprägen aufbringbar ist.

Jede der Schichten 222 und 224 kann auch mehrere Teilschichten umfassen.

Die in Fig. 4 gezeigten Dickenverhältnisse sind nicht maßstäblich.

Die einzelnen Schichten der Übertragungslage sind zwischen 1 nm und 50 µm dick.

Zwar wurde die Erfindung unter Bezug auf bestimmte Ausführungsformen beschrieben, es sollte sich aber verstehen, dass die Erfindung auf diese Beispiele nicht beschränkt ist, und dass zahlreiche Abwandlungen vom Fachmann vorgesehen und erdacht werden können, nachdem er sich die Beispiele angesehen hat.

### Bezugszeichenliste

- 100: Erste-Hilfe-Koffer
- 10: Kofferschale
- 20: Griff
- 30: Einsatzteil
- 40: Verschluss
- 50: Stapelzentriereinrichtung
- 60: Feld
- 70: Feld
- 72: Symbol
- 74: Schriftzug
- 200: Heißprägefolie
- 210: Trägerfolie
- 220: Übertragungslage
- 221: Ablöseschicht
- 222: Schicht
- 223: Schutzlackschicht
- 224: Schicht
- 225: hitzeaktivierbare Kleberschicht

## Patentansprüche

1. Erste-Hilfe-Koffer (100), **dadurch gekennzeichnet, dass** mindestens ein Teilbereich des Erste-Hilfe-Koffers (100) ein phosphoreszierendes Material beinhaltet, wobei das phosphoreszierende Material im Rahmen eines Heißprägevorgangs in einer Schicht auf eine Außenfläche des Erste-Hilfe-Koffers (100) aufgebracht worden ist.

2. Erste-Hilfe-Koffer (100) nach Anspruch 1, **dadurch gekennzeichnet, dass** das phosphoreszierende Material als Pigment bereitgestellt, das Partikeln aus SrAl₂O₄:Eu, Dy enthält, welche vorzugsweise mittlere Durchmesser d₉₀ ≤ 5 µm aufweisen.

3. Erste-Hilfe-Koffer (100) nach Anspruch 1 oder 2, **dadurch gekennzeichnet, dass** die Schicht mit dem phosphoreszierenden Material eine Schichtdicke von zwischen 5 und 15 g/m², vorzugsweise von zwischen 9 und 13 g/m², besonders vorzugsweise von zwischen 10 und 12 g/m² aufweist.

4. Erste-Hilfe-Koffer (100) nach einem der vorhergehenden Ansprüche, **dadurch gekennzeichnet, dass** das phosphoreszierende Material in einer Schicht bereitgestellt ist, die auch einen Schutzlack und/oder einen Farblack enthält.

5. Erste-Hilfe-Koffer (100) nach einem der vorhergehenden Ansprüche, **gekennzeichnet durch** eine im Heißprägevorgang ebenfalls aufgebrachte weitere Schicht zwischen der Schicht mit dem phosphoreszierenden Material und der Außenfläche, wobei die weitere Schicht transparent ist oder Weißlack umfasst.

6. Erste-Hilfe-Koffer (100) nach einem der vorhergehenden Ansprüche, **dadurch gekennzeichnet, dass** die Schicht mit dem phosphoreszierenden Material einen Dekor und/oder eine Information, insbesondere in Form von Schrift und/oder zumindest einem Symbol, bereitstellt.

7. Erste-Hilfe-Koffer (100) nach einem der vorhergehenden Ansprüche, **dadurch gekennzeichnet, dass** der Erste-Hilfe-Koffer (100) zwei Kofferschalen (10) aufweist und die Außenfläche auf einer Außenwandung einer Kofferschale (10) bereitgestellt ist.

8. Erste-Hilfe-Koffer (100) nach einem der vorhergehenden Ansprüche, bei dem der Erste-Hilfe-Koffer (100) zwei Kofferschalen (10) aufweist und Körper als Teilbereiche, welche das phosphoreszierende Material beinhalten, an die Kofferschalen (10) anbringbare Anbauteile sind.

9. Erste-Hilfe-Koffer (100), nach Anspruch 8, **gekennzeichnet dadurch, dass** die anbringbaren Anbauteile zumindest aus einem der folgenden Elemente gewählt sind:
- Griff (20),
- Komponente des Griffs (20), insbesondere Einsatzteil (30),
- Verschluss (40),
- Komponente des Verschlusses (40), insbesondere Betätigungselement,
- Stapelzentriereinrichtung (50),
- Zierleiste.

10. Erste-Hilfe-Koffer (100) nach einem der Ansprüche 8 oder 9, **gekennzeichnet dadurch, dass** der Griff (20) und/oder eine Kofferschale (10) als Körper phosphoreszierendes Material beinhaltet bzw. beinhalten.

11. Erste-Hilfe-Koffer (100) nach einem der vorhergehenden Ansprüche, **gekennzeichnet dadurch, dass** das phosphoreszierende Material eine Nachleuchtdauer von mindestens 1 h, bevorzugt mindestens 2 h, besonders bevorzugt mindestens 3 h aufweist.

12. Erste-Hilfe-Koffer (100) nach einem der vorhergehenden Ansprüche, **dadurch gekennzeichnet, dass** mindestens ein Körper des Erste-Hilfe-Koffers (100) aus einem Material besteht, das phosphoreszierendes Material beinhaltet, wobei der Massenanteil des phosphoreszierenden Materials in dem Körper mindestens 10 %, vorzugsweise mindestens 30 % beträgt.

13. Erste-Hilfe-Koffer (100), nach einem der vorhergehenden Ansprüche, **dadurch gekennzeichnet, dass** der Erste-Hilfe-Koffer (100) befüllt ist mit zumindest einem aus:
- Pflaster und Verbandsmaterial,
- Einmalhandschuhen,
- Erste-Hilfe-Scheren und Pinzetten,
- Hygienemundschutz,
- Hygienekleidung,
- Notduschen und Augenspülung,
- Desinfektionsmittel und Spender dazu,
- Defibrillatoren und Zubehör,
- Beatmungsmasken.

14. Erste-Hilfe-Koffer (100) nach einem der vorhergehenden Ansprüche, **dadurch gekennzeichnet, dass** zumindest ein Oberflächenteilbereich (60) metallisiert ist.

15. Verfahren zur Herstellung eines Erste-Hilfe-Koffers (100), das aufweist:
- Bereitstellen von zwei Kofferschalen (10) und einem Griff (20);
- Vornehmen zumindest eines Heißprägevorgangs, wobei in der Gesamtheit von allen Heißprägevorgängen auf zumindest eine der Kofferschalen (10) und/oder den Griff (20) eine Schicht mit phosphoreszierenden Partikeln aufgebracht wird;
- Verbinden der beiden Kofferschalen (10) zu einem Erste-Hilfe-Koffer (100);
- - Anbringen des Griffs (20) an eine Kofferschale (10).

16. Verfahren nach Anspruch 15, **dadurch gekennzeichnet, dass** jeder Heißprägevorgang mit einem Heißprägestempel erfolgt, der auf eine Temperatur von zwischen 130° C bis 165° C gebracht ist und/oder über eine Zeitdauer von zwischen 0,25 s und 5 s gegen die Kofferschale (10) beziehungsweise den Griff (20) gedrückt wird und/oder mit einem Druck von zwischen 3 und 9 bar, vorzugsweise zwischen 5 und 7 bar, gegen die Kofferschale (10) beziehungsweise den Griff (20) gedrückt wird und/oder unter Aufbringung eines Gewichts von zwischen 600 und 1000 kg, vorzugsweise zwischen 720 und 880 kg, gegen die Kofferschale (10) beziehungsweise den Griff (20) gedrückt wird.

17. Verfahren nach einem der Anspruch 15 oder 16, **dadurch gekennzeichnet, dass**
- die Kofferschalen (10) und der Griff (20) in einem Spritzgussvorgang aus einem thermoplastischen Kunststoff, bevorzugt aus einem Acrylnitril-Butadien-Styrol-Kunststoff, hergestellt werden.

18. Verfahren nach Anspruch 17, wobei
vor dem Spritzgussvorgang dem thermoplastischen Kunststoff für die Herstellung der Kofferschalen (10) und/oder des Griffs (20) phosphoreszierendes Material zugesetzt wird.

19. Verfahren nach einem der Ansprüche 15 bis 18, **dadurch gekennzeichnet, dass** in jedem Heißprägevorgang eine Heißprägefolie verwendet wird, welche eine Transferlage aufweist, die phosphoreszierende Partikeln aus SrAl₂O₄:Eu, Dy enthält.

20. Verfahren nach Anspruch 19, **dadurch gekennzeichnet, dass** die phosphoreszierenden Partikeln mittlere Durchmesser d₉₀ ≤ 5 µm aufweisen.

21. Verfahren nach einem der Ansprüche 15 bis 20
mit dem zusätzlichen Schritt:
Metallisieren zumindest von Oberflächenteilbereichen (60) der Kofferschalen (10) und/oder des Griffs (20), wobei das Metallisieren vorzugsweise durch die folgenden Schritte realisiert wird:
- Ätzen der Oberflächenteilbereiche (60) des Erste-Hilfe-Koffers (100) mit einer Lösung bestehend aus Chromsäure, Schwefelsäure und Wasser, wobei das Ätzen bei einer Temperatur von mind. 60 °C, bevorzugt bei 70 °C durchgeführt wird;
- Aktivieren der Oberflächenteilbereiche (60) mit Palladium, wobei das Palladium kolloidal gelöst und von einer Schutzkolloidhülle umgeben ist oder ionisch vorliegt;
- Benetzen der Oberflächenteilbereiche (60) mit einer Beschleunigerlösung, wobei die Beschleunigerlösung so gewählt ist, dass sie ionisch vorliegendes Palladium reduziert oder im Fall von kolloidal gelöstem Palladium die das kolloidale Palladium umgebende Schutzkolloidhülle entfernt;
- Chemisches Abscheiden von Nickel auf den Oberflächenteilbereichen (60);
- Galvanisches Abscheiden von Kupfer auf den vernickelten Oberflächenteilbereichen (60);
- Galvanisches Abscheiden von Nickel auf den verkupferten Oberflächenteilbereichen (60);
- Galvanisches Abscheiden von Chrom auf den durch galvanisches Abscheiden vernickelten Oberflächenteilbereichen (60);
- Trocknen der Oberflächenteilbereiche (60), bevorzugt bei einer Temperatur von 67 °C,
wobei zwischen den einzelnen Schritten die Oberflächenteilbereiche (60) mit Wasser, bevorzugt mit deionisiertem Wasser, gespült werden.
